# EUROPÄISCHE PATENTSCHRIFT

(11) **EP 2 562 040 B1**
(45) Veröffentlichungstag und Bekanntmachung des Hinweises auf die Patenterteilung: **07.04.2021**
(21) Anmeldenummer: 12173809.0
(22) Anmeldetag: 27.06.2012
(51) Int. Cl.: B60Q 1/08, G08G 1/16

(54) **Verfahren zur Steuerung einer Lichtaussendung eines Scheinwerfers eines Fahrzeugs**
Method for controlling the light emission of a headlamp of a vehicle
Procédé de régulation de l'émission lumineuse d'un phare de véhicule

(30) Priorität: 23.08.2011 DE 102011081367
(43) Veröffentlichungstag der Anmeldung: 27.02.2013
(73) Patentinhaber: Robert Bosch GmbH, 70442 Stuttgart (DE)
(72) Erfinder: Nordbruch, Stefan, 70806 Kornwestheim (DE)

(56) Entgegenhaltungen:
- DE-A1-102004 028 772
- DE-A1-102004 050 597
- DE-A1-102005 026 684
- DE-A1-102008 061 747
- DE-A1-102009 048 619
- DE-A1-102010 007 866
- JP-A- 2011 084 106

## Beschreibung

### Stand der Technik

Die vorliegende Erfindung bezieht sich auf ein Verfahren zur Steuerung einer Lichtaussendung eines Scheinwerfers eines Fahrzeugs, wobei das Verfahren eine Empfangseinrichtung nutzt, auf eine Vorrichtung, die ausgebildet ist, um die Schritte eines solchen Verfahrens durchzuführen, sowie auf ein Computerprogrammprodukt mit Programmcode, der auf einem maschinenlesbaren Träger gespeichert ist, zur Durchführung eines solchen Verfahrens, wenn das Programm auf einer Vorrichtung ausgeführt wird.

Im Straßenverkehr führen Gefahren, wie beispielsweise unbeleuchtete Fahrzeuge, Gegenstände, Tiere oder Personen auf der Fahrbahn und dergleichen, vor allem in der Dunkelheit und auch bei hohen Geschwindigkeiten, häufig zu schweren Verkehrsunfällen mit Toten und Schwerverletzten, da aufgrund mangelnder Anpassung der Lichtaussendung der Scheinwerfer die Gefahren zu spät erkannt werden.

Die DE 10 2008 041 355 A1 offenbart ein Verfahren, eine Vorrichtung, ein Computerprogramm und ein Computerprogrammprodukt zum Regeln eines Lichtsystems eines Kraftfahrzeugs, insbesondere eines Scheinwerfersystems eines am Straßenverkehr teilnehmenden Kraftfahrzeugs. Zum Regeln werden die Schritte ausgeführt: Detektieren einer aktuellen Verkehrssituation umfassend mindestens Detektieren einer Kraftfahrzeuggeschwindigkeit und Detektieren eines Zustands des Lichtsystems und Einstellen des Zustands des Lichtsystems in Abhängigkeit der detektierten Verkehrssituation, wobei das Detektieren der aktuellen Verkehrssituation weiter den Schritt Detektieren eines Hindernisses umfasst, um das Lichtsystem in Abhängigkeit der so bestimmten Verkehrssituation einzustellen.

Die DE 10 2005 026 684 A1 beschreibt ein Fahrzeug-Beleuchtungssystem zum Beleuchten vor einem Fahrzeug mit einer Vielzahl von Lichtquellen und einer Steuereinheit zum Bestimmen einer Verkehrsszene, in welcher das Fahrzeug fährt, und zum unabhängigen Ändern von wenigstens entweder Ausrichtungen oder Lichtmengen der Vielzahl von Lichtquellen, um ein Solllichtverteilungsmuster zu bilden, das für die Verkehrsszene im Voraus eingestellt worden ist.

Die DE 10 2004 028 772 A1 offenbart ein Unfallverhütungssystem mit einer Recheneinheit zur Steuerung und/oder Regelung von Erschreckungssignalen für Wild; wobei von der Recheneinheit das Risiko für einen Wildwechsel bestimmt wird und bei Überschreiten eines vorgegebenen Sollwertes automatisch mindestens ein Erschreckungssignal aktiviert wird.

Die DE 10 2010 007 866 A1 betrifft ein Verfahren zum Einstellen der Lichtverteilung von Fahrzeugscheinwerfern eines Kraftfahrzeuges, bei dem in Abhängigkeit der Verkehrssituation die Lichtverteilung eingestellt wird, wobei mit einer Kommunikationseinheit versehene Verkehrsteilnehmer mittels einer in dem Kraftfahrzeug angeordneten Erfassungseinrichtung detektiert werden, indem die Erfassungseinrichtung ein von Kommunikationseinheit abgegebenes Funksignal empfängt und auswertet, und wobei in Abhängigkeit des Auswerteergebnisses die Lichtverteilung der Fahrzeugscheinwerfer eingestellt wird.

Die DE 10 2009 048 619 A1 betrifft ein Verfahren zur Steuerung eines Fahrlichts eines Fahrzeugs mit zumindest einem Scheinwerfer und mit zumindest einem Sensor zu einer Detektion von Objekten, wobei bei einer Kollisionsgefahr mit zumindest einem Objekt eine Sonderfunktion des Fahrlichts aktiviert wird.

### Offenbarung der Erfindung

Vor diesem Hintergrund werden mit der vorliegenden Erfindung ein Verfahren zur Steuerung einer Lichtaussendung eines Scheinwerfers eines Fahrzeugs, wobei das Verfahren eine Empfangseinrichtung nutzt, eine Vorrichtung, die ausgebildet ist, um die Schritte eines solchen Verfahrens durchzuführen, sowie ein Computerprogrammprodukt mit Programmcode, der auf einem maschinenlesbaren Träger gespeichert ist, zur Durchführung eines solchen Verfahrens, wenn das Programm auf einer Vorrichtung ausgeführt wird, gemäß den unabhängigen und nebengeordneten Patentansprüchen vorgestellt. Vorteilhafte Ausgestaltungen ergeben sich aus den jeweiligen Unteransprüchen und der nachfolgenden Beschreibung.

Die vorliegende Erfindung schafft ein Verfahren zur Steuerung einer Lichtaussendung zumindest eines Scheinwerfers eines Fahrzeugs, wobei das Verfahren eine Empfangseinrichtung nutzt, wobei das Verfahren folgende Schritte aufweist:
Einlesen zumindest eines mittels der Empfangseinrichtung übertragenen Gefahrenwarnsignals, wobei das zumindest eine Gefahrenwarnsignal eine Gefahrenposition angibt, an der sich ein Objekt befindet, das eine Gefahr für das (oder andere) Fahrzeug(e) darstellt
Ermitteln eines Toleranzbereichs abhängig von dem zumindest einen Gefahrenwarnsignal, wobei der Toleranzbereich ein Bereich um diese Route ist, der die Route und einen über den Rand der Route hinausgehenden Bereich umfasst;
Überprüfen, ob die durch das zumindest eine Gefahrenwarnsignal angegebene Gefahrenposition innerhalb des Toleranzbereichs auf einer aktuell von dem Fahrzeug befahrenen Route liegt; und
Verändern der Lichtaussendung des zumindest einen Scheinwerfers von einer ersten Abstrahlcharakteristik zu einer zweiten Abstrahlcharakteristik, wenn die Gefahrenposition innerhalb des Toleranzbereichs auf der aktuell von dem Fahrzeug befahrenen Route liegt, um die Lichtaussendung des zumindest einen Scheinwerfers zu steuern, wobei die zweite Abstrahlcharakteristik eine an die Gefahrenposition und/oder den Toleranzbereich angepasste Abstrahlcharakteristik ist.

Bei dem Fahrzeug kann es sich um ein Kraftfahrzeug handeln, insbesondere ein straßengebundenes Kraftfahrzeug, beispielsweise einen Personenkraftwagen, Lastkraftwagen, ein Fahrzeug zum Personentransport oder ein sonstiges Nutzfahrzeug. Bei dem zumindest einen Scheinwerfer kann es sich beispielsweise um einen Frontscheinwerfer des Fahrzeugs handeln. Die Lichtaussendung des Scheinwerfers kann hierbei in Stufen oder stufenlos veränderbar sein. Die Lichtaussendung des Scheinwerfers kann dabei hinsichtlich der Abstrahlcharakteristik des Scheinwerfers verändert werden. Die Abstrahlcharakteristik kann eine Helligkeit, einen Leuchtwinkel, eine Breite oder Größe des auszuleuchtenden Fahrbahnbereichs vordem Fahrzeug, eine Leuchthöhe, ein Beleuchtungsmuster, eine Zuschaltung oder Abschaltung von Leuchtmitteln und/oder dergleichen betreffen, die eine Lichtaussendung durch die Scheinwerfer charakterisieren. Die Empfangseinrichtung ist ausgebildet, um das zumindest eine Gefahrenwarnsignal zu empfangen. Die Empfangseinrichtung kann mit einem Navigationsgerät und/oder einem sonstigen mobilen Datenübertragungsgerät, beispielsweise einem internetfähigen Mobiltelefon, verbunden sein oder Teil eines solchen Gerätes sein. Das zumindest eine Gefahrenwarnsignal wird über den Verkehrsfunk (mit einer Verkehrsfunkempfangseinrichtung) und/oder das Internet und/oder C2X- oder C2C-Kommunikationsverbindungen übertragen. Das zumindest eine Gefahrenwarnsignal kann somit auch einem Internetdienst zugeordnet sein. Der Internetdienst kann eine Datenbank im Internet mit Verkehrsgefahrenmeldungen aufweisen. Das zumindest eine Gefahrenwarnsignal kann in Gestalt von Daten von einem solchen Internetdienst von einem Navigationsgerät und/oder internetfähigen Mobiltelefon empfangen bzw. abgerufen werden. Das zumindest eine Gefahrenwarnsignal kann ein standardisiertes Format aufweisen. Das zumindest eine Gefahrenwarnsignal repräsentiert eine Gefahrenposition. Bei der Gefahrenposition handelt es sich um eine geographische Position, an der eine Gefahrensituation im Straßenverkehr vorliegt. Entweder handelt es sich bei der Position um einen Punkt, oder eine Strecke oder Gebiet, z.B. von einer Ausfahrt zur folgenden. Über Verkehrsfunk werden Meldungen bezüglich Objekte ausgestrahlt, die den Straßenverkehr gefährdenden. Beispiele für derartige Objekte können Personen, Gegenstände, usw. sein, die in Form von Gefahrenwarnsignalen und einer zugehörigen Position dieser Objekte zur Verfügung gestellt werden. Fahrzeuge, Gegenstände, Tiere und/oder Personen auf der Fahrbahn werden im Verkehrsfunk vor allem für Autobahnen und Bundesstraßen gemeldet. Beispiele sind unter anderem ein unbeleuchtetes Fahrzeug auf einer bestimmten Fahrspur, auf einer bestimmten Autobahn, in einer bestimmten Richtung vor einer bestimmten Abfahrt; ein Anhänger auf einer bestimmten Fahrspur, auf einer bestimmten Autobahn, in einer bestimmten Richtung zwischen zwei Orten; ein Auspuff, Reifen oder anderer Gegenstände auf einer bestimmten Autobahn, in einer bestimmten Richtung nach einer bestimmten Abfahrt; Personen auf einer bestimmten Bundesstraße zwischen zwei Orten; Wildschweine oder andere Tiere auf einer bestimmten Autobahn zwischen zwei Orten. Die Gefahrenposition kann auch in Form von Koordinaten durch das zumindest eine Gefahrenwarnsignal repräsentiert sein. Ein Navigationsgerät kann die Koordinaten der Gefahrenposition verarbeiten. Ein Navigationsgerät kann das Gefahrenwarnsignal aus dem Verkehrsfunk herunterladen und Gefahren mit deren Gefahrenpositionen darstellen und verarbeiten. Ein Navigationsgerät bzw. dessen zugrundeliegende Karten stellen beispielsweise Straßen inklusive deren Fahrspuren zur Verfügung. Ein Navigationsgerät kann ausgebildet sein, um eine Position des Fahrzeugs, in dem das Navigationsgerät angeordnet ist, zu bestimmen und basierend auf Nutzereingaben eine Route zu berechnen. Das Navigationsgerät kann Kartendaten aufweisen. Ein Navigationsgerät ermöglicht mit Hilfe von Positionsbestimmung und gespeicherten Geoinformationen eine Zielführung zu einem gewählten Ort oder eine Route unter Beachtung gewünschter Kriterien. Es ist daher zu erwarten, dass das Fahrzeug sich auf dieser Route bewegen wird. Unter einem Toleranzbereich kann ein Bereich um diese Route verstanden werden, der die Route und einen über den Rand der Route hinausgehenden Bereich umfasst, Beispielsweise kann der Toleranzbereich die doppelte Breite der Straße aufweisen, die das Fahrzeug befahren wird. Auf diese Weise können auch Objekte als Gefahr betrachtet und berücksichtigt werden, denen im Gefahrenwarnsignal eine Gefahrenposition zugeordnet ist, die nicht genau auf der Route, sondern im Randbereich der Route, beispielsweise auf einem Seitenstreifen einer Autobahn verortet sind.

Die vorliegende Erfindung schafft ferner eine Vorrichtung, die ausgebildet ist, um die Schritte des erfindungsgemäßen Verfahrens durchzuführen bzw. umzusetzen. Insbesondere kann die Vorrichtung Einrichtungen aufweisen, die ausgebildet sind, um die Schritte des Verfahrens auszuführen. Auch durch diese Ausführungsvariante der Erfindung in Form einer Vorrichtung kann die der Erfindung zugrunde liegende Aufgabe schnell und effizient gelöst werden.

Unter einer Vorrichtung kann vorliegend ein elektrisches Gerät bzw. Steuergerät verstanden werden, das Sensorsignale verarbeitet und in Abhängigkeit davon Steuersignale ausgibt. Die Vorrichtung kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Vorrichtung beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert ist und zur Durchführung des Verfahrens nach einem der vorstehend beschriebenen Ausführungsformen verwendet wird, wenn das Programm auf einer Vorrichtung ausgeführt wird.

Die Erfindung basiert auf der Erkenntnis, dass eine Steuerung einer Lichtaussendung zumindest eines Scheinwerfers eines Fahrzeugs, beispielsweise auch eine Adaption von intelligenten Fahrzeuglichtsystemen, vorteilhaft auf der Basis von Verkehrsfunk-Gefahrenwarnungen erfolgen kann. ein wichtiger Aspekt dieser Erfindung ist eine Anpassung der Steuerung der Lichtaussendung des zumindest einen Scheinwerfers des Fahrzeugs auf eine Verkehrsfunkgefahrenwarnung hin bezüglich der gemeldeten Gefahr. Die Anpassung kann beispielsweise ein Navigationsgerät oder dergleichen sowie intelligente bzw. adaptive Lichtsysteme nutzen und kann zusätzlich mit einem Fahrzeuglichtdetektionssystem erweitert werden.

Ein Vorteil der vorliegenden Erfindung liegt darin, dass ein Fahrer möglichst frühzeitig eine optimale Sicht auf eine Gefahrensituation hat. Somit kann eine Verkehrssicherheit erhöht bzw. kann ein Unfallrisiko gesenkt werden. Zudem stellt die Steuerung der Lichtaussendung unter Verwendung der Gefahrenwarnsignale eine kostengünstige und Platz sparende Lösung dar, weil zum Teil auch bereits vorhandene Eingangsgrößen und Einrichtungen verwendet werden können. Die Gefahrenwarnsignale stellen zudem eine zuverlässige Datengrundlage dar.

So kann im Schritt des Veränderns die erste Abstrahlcharakteristik eine ursprüngliche Abstrahlcharakteristik repräsentieren. Auch kann die zweite Abstrahlcharakteristik eine an die angegebene Gefahrenposition angepasste Abstrahlcharakteristik repräsentieren. Dabei kann die angegebene Gefahrenposition bei Ausleuchtung unter Verwendung der zweiten Abstrahlcharakteristik heller ausgeleuchtet sein als bei Ausleuchtung unter Verwendung der ersten Abstrahlcharakterisik. Die erste bzw. ursprüngliche Abstrahlcharakteristik kann beispielsweise ein Abblendlicht oder Fernlicht repräsentieren oder einem Abblendlicht oder Fernlicht ähnlich sein. Die zweite bzw. an die angegebene Gefahrenposition angepasste Abstrahlcharakteristik kann beispielsweise ein Fernlicht, Kurvenlicht oder dergleichen repräsentieren oder einem Fernlicht, Kurvenlicht oder dergleichen ähnlich sein. Somit kann die zweite Abstrahlcharakteristik bezüglich der ersten Abstrahlcharakteristik eine veränderte Helligkeit, einen veränderten Leuchtwinkel, eine veränderte Breite oder veränderte Größe des auszuleuchtenden Fahrbahnbereichs vor dem Fahrzeug, eine veränderte Leuchthöhe, ein verändertes Beleuchtungsmuster und/oder dergleichen aufweisen. Die Anpassung besteht darin, dass dem Fahrer eine verbesserte Sicht auf die Gefahrenposition geboten wird. Die verbesserte Sicht besteht beispielsweise darin, dass das Fahrzeuglicht so adaptiert wird, dass die Gefahrenposition so früh und/oder deutlich bzw. vollständig wie möglich ausgeleuchtet bzw. beleuchtet wird. Eine solche Ausführungsform bietet den Vorteil, dass eine optimale Ausleuchtung der Gefahrenposition erfolgen kann. So kann die Sicht auf die Gefahrenposition für den Fahrer des Fahrzeugs weiter verbessert werden, sodass die Verkehrssicherheit weiter steigt.

Ferner kann ein Schritt des Bestimmens der zweiten Abstrahlcharakteristik basierend auf dem zumindest einen Gefahrenwarnsignal oder basierend auf dem zumindest einen Gefahrenwarnsignal sowie auf einer Position zumindest eines weiteren Fahrzeugs in einer Umgebung der angegebenen Gefahrenposition vorgesehen sein. Die Position des zumindest einen weiteren Fahrzeugs kann beispielsweise mittels einer Fahrzeugkamera ermittelt werden, die über eine Objekterkennungsfunktion verfügt. Eine solche Ausführungsform bietet den Vorteil, dass eine auf die optimale Ausleuchtung der Gefahrenposition individuell abgestimmte Abstrahlcharakteristik eingestellt werden kann, was die Unfallgefahr weiter reduziert. Zudem kann dabei auch eine Blendung anderer Verkehrsteilnehmer vermieden oder verringert werden. Die Verkehrssicherheit wird dadurch weiter erhöht.

Zudem kann im Schritt des Einlesens zumindest ein Gefahrenwarnsignal eingelesen werden, das zusätzlich eine Gefahreneigenschaft angibt. Die Gefahreneigenschaft kann beispielsweise eine Information dahingehend beinhalten, ob die Gefahr von einem stationären Objekt oder von einem sich bewegenden Objekt ausgeht. Auch kann die Gefahreneigenschaft eine Geschwindigkeit, Bewegungsrichtung, Anzahl des Objekts, von dem die Gefahr ausgeht, und/oder dergleichen repräsentieren. Die Gefahreneigenschaft, die in dem zumindest einen Gefahrenwarnsignal angegeben ist, kann im Schritt des Veränderns der Lichtaussendung und/oder im Schritt des Bestimmens der zweiten Abstrahlcharakteristik berücksichtigt werden. Eine solche Ausführungsform bietet den Vorteil, dass die Abstrahlcharakteristik des zumindest einen Scheinwerfers des Fahrzeugs somit noch genauer an die zu erwartende Gefahr angepasst und somit die Verkehrssicherheit noch weiter gesteigert werden kann.

Des Weiteren kann im Schritt des Ermittelns der Toleranzbereich abhängig einer Straßeneigenschaft bei der angegebenen Gefahrenposition ermittelt werden. Der Toleranzbereich kann beispielsweise abhängig von der Gefahrenposition ermittelt werden. Zusätzlich oder alternativ kann der Toleranzbereich beispielsweise abhängig von der Gefahreneigenschaft ermittelt werden. Dabei kann bei der Ermittlung des Toleranzbereichs berücksichtigt werden, ob es sich bei dem Objekt, von dem die Gefahr ausgeht, um ein sich bewegendes oder feststehendes Objekt handelt. Bei der Straßeneigenschaft kann es sich um eine Breite, Neigung, Biegung etc. der Straße handeln. Auch kann eine Genauigkeit der Angabe der Gefahrenposition in dem zumindest einen Gefahrenwarnsignal bei dem Ermitteln des Toleranzbereichs berücksichtigt werden. Eine solche Ausführungsform bietet den Vorteil, dass ein Sicherheitspuffer geschaffen ist, der potentiell ungenaue Angaben in dem zumindest einen Gefahrenwarnsignal und dergleichen kompensieren kann, so dass eine zuverlässige Verbesserung der Sicht auf die Gefahrenposition gewährleistet werden kann.

Insbesondere kann im Schritt des Veränderns die Lichtaussendung des zumindest einen Scheinwerfers verändert werden, wenn sich das Fahrzeug der angegebenen Gefahrenposition bis auf einen vorgebbaren Abstand genähert hat. Der Abstand kann basierend auf dem zumindest einen Gefahrenwarnsignal vorgegeben werden. Insbesondere kann der Abstand basierend auf einer Gefahreneigenschaft vorgegeben werden. Wenn sich beispielsweise das Objekt, von dem die Gefahr ausgeht, bewegt, so kann eine geschätzte Bewegung des Objekts in dem vorgebbaren Abstand berücksichtigt werden. Eine solche Ausführungsform bietet den Vorteil, dass auch hier ein Sicherheitspuffer geschaffen ist, der potentiell ungenaue Angaben in dem zumindest einen Gefahrenwarnsignal und dergleichen kompensieren kann, so dass eine zuverlässige und rechtzeitige Verbesserung der Sicht auf die Gefahrenposition gewährleistet werden kann.

Gemäß einer Ausführungsform kann ein Schritt des Änderns der Lichtaussendung des zumindest einen Scheinwerfers von der zweiten Abstrahlcharakteristik zu einer dritten Abstrahlcharakteristik vorgesehen sein, wenn das Fahrzeug die Gefahrenposition passiert hat. Die Lichtaussendung kann zu der dritten Abstrahlcharakteristik geändert werden, wenn eine Änderung bzw. Rückkehr zu der ersten Abstrahlcharakteristik unter Berücksichtigung einer Verkehrssituation nach dem Passieren der Gefahrenposition ungeeignet ist. Dies kann beispielsweise der Fall sein, wenn andere Fahrzeuge durch die erste Abstrahlcharakteristik geblendet würden oder dergleichen. Eine solche Ausführungsform bietet den Vorteil, dass eine flexible Reaktion auf eine aktuelle Verkehrssituation möglich ist und auch nach dem Passieren der Gefahrenposition eine Blendung anderer Fahrzeuge verringert oder vermieden werden kann.

Weiterhin ist in jeder Phase auch eine Ausleuchtcharakteristik denkbar, die die Ausleuchtung nicht (nur) für das eigene Fahrzeug, sondern auch für andere Verkehrsteilnehmer durchführt.

Gemäß einer weiteren Ausführungsform kann ein Schritt des Wiederherstellens der ersten Abstrahlcharakteristik der Lichtaussendung des zumindest einen Scheinwerfers vorgesehen sein, wenn das Fahrzeug die Gefahrenposition passiert hat. Hierbei kann die erste Abstrahlcharakteristik ausgehend von der zweiten Abstrahlcharakteristik wiederhergestellt werden. Alternativ oder zusätzlich kann die erste Strahlcharakteristik auch ausgehend von der dritten Abstrahlcharakteristik wiederhergestellt werden. Die erste Abstrahlcharakteristik kann wiederhergestellt werden, wenn die erste Abstrahlcharakteristik für die aktuelle Verkehrssituation nach dem Passieren der Gefahrenposition geeignet ist. Dies kann beispielsweise dann der Fall sein, wenn die Verkehrssituation nach dem Passieren der Gefahrenposition im Wesentlichen der Verkehrssituation zu einem Zeitpunkt des Veränderns der Lichtaussendung von der ersten Abstrahlcharakteristik zu der zweiten Abstrahlcharakteristik entspricht. Eine solche Ausführungsform bietet den Vorteil, dass die ursprüngliche Lichtaussendung wiederhergestellt wird, wenn es die Verkehrssituation zulässt, sodass die Lichtaussendung bei der Weiterfahrt des Fahrzeugs optimal an die Verkehrssituation angepasst werden kann.

Die Erfindung wird anhand der beigefügten Zeichnungen beispielhaft näher erläutert. Es zeigen:
- Fig. 1: eine schematische Darstellung eines Fahrzeugs mit einer Steuervorrichtung gemäß einem Ausführungsbeispiel der vorliegenden Erfindung;
- Fig. 2: ein Ablaufdiagramm eines Verfahrens gemäß einem Ausführungsbeispiel der vorliegenden Erfindung;
- Fig. 3: eine Darstellung eines Fahrzeugs bei verschiedenen Abstrahlcharakteristiken;
- Fig. 4: eine Darstellung zweier Fahrzeuge bei einer Abstrahlcharakteristik;
- Figuren 5A, 5B, 6A, 7A, 8A und 8B: schematische Darstellungen von Verkehrssituationen bei verschiedenen Abstrahlcharakteristiken; und
- Figuren 5C, 6B, 7B, 8C und 9: schematische Darstellungen von Verkehrssituationen bei verschiedenen Abstrahlcharakteristiken gemäß Ausführungsbeispielen der vorliegenden Erfindung.

Gleiche oder ähnliche Elemente können in den Figuren durch gleiche oder ähnliche Bezugszeichen versehen sein, wobei auf eine wiederholte Beschreibung verzichtet wird. Ferner enthalten die Figuren der Zeichnungen, deren Beschreibung sowie die Ansprüche zahlreiche Merkmale in Kombination. Einem Fachmann ist dabei klar, dass diese Merkmale auch einzeln betrachtet werden oder sie zu weiteren, hier nicht explizit beschriebenen Kombinationen zusammengefasst werden können. Weiterhin ist die Erfindung in der nachfolgenden Beschreibung eventuell unter Verwendung von unterschiedlichen Maßen und Dimensionen erläutert, wobei die Erfindung nicht auf diese Maße und Dimensionen eingeschränkt zu verstehen ist. Ferner können erfindungsgemäße Verfahrensschritte wiederholt sowie in einer anderen als in der beschriebenen Reihenfolge ausgeführt werden. Umfasst ein Ausführungsbeispiel eine "und/oder"-Verknüpfung zwischen einem ersten Merkmal/Schritt und einem zweiten Merkmal/Schritt, so kann dies so gelesen werden, dass das Ausführungsbeispiel gemäß einer Ausführungsform sowohl das erste Merkmal / den ersten Schritt als auch das zweite Merkmal /den zweiten Schritt und gemäß einer weiteren Ausführungsform entweder nur das erste Merkmal /Schritt oder nur das zweite Merkmal /Schritt aufweist.

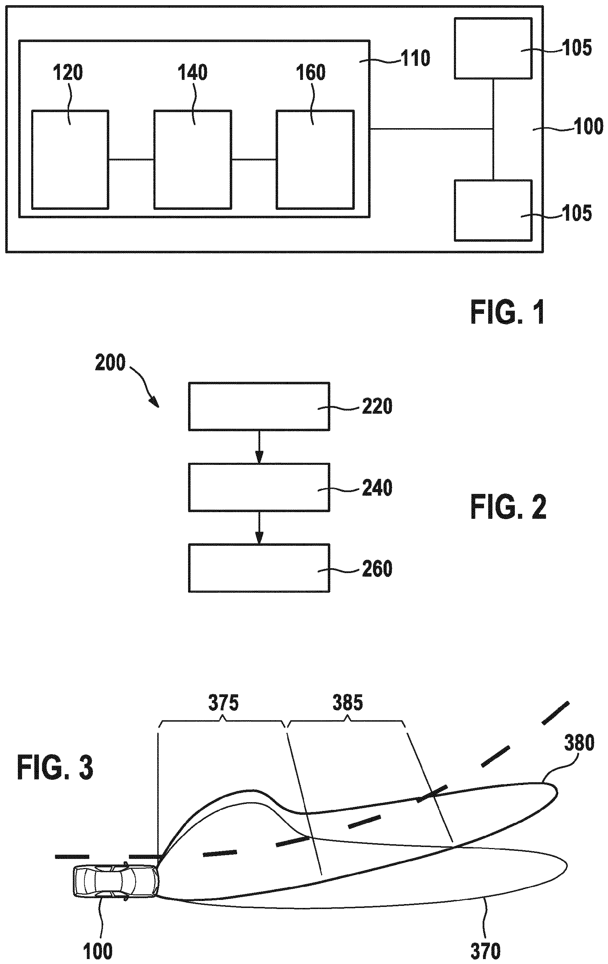

Fig. 1 zeigt eine schematische Darstellung eines Fahrzeugs 100 mit einer Steuervorrichtung gemäß einem Ausführungsbeispiel der vorliegenden Erfindung. Das Fahrzeug 100 weist beispielhaft zwei Scheinwerfer 105, eine Steuervorrichtung 110, eine Einleseeinrichtung 120, eine Überprüfungseinrichtung 140 und eine Veränderungseinrichtung 160 auf. Die zwei Scheinwerfer 105 sind mit der Steuervorrichtung 110 beispielsweise über zumindest eine Signalleitung verbunden. Die Steuervorrichtung 110 weist die Einleseeinrichtung 120, die Überprüfungseinrichtung 140 und die Veränderungseinrichtung 160 auf.

Die Scheinwerfer 105 können über die zumindest eine Signalleitung ein Steuersignal von der Steuervorrichtung 110 empfangen. Das Steuersignal bewirkt, dass eine Veränderung einer Lichtaussendung der Scheinwerfer 105 erfolgt. Ein einzelner Scheinwerfer 105 kann eines oder mehrere Leuchtmittel aufweisen und/oder eine zu einem weiteren Scheinwerfer unterschiedliche Abstrahlcharakteristik aufweisen.

Die Steuervorrichtung 110 ist ausgebildet, um eine Steuerung der Lichtaussendung der Scheinwerfer 105 des Fahrzeugs 100 durchzuführen. Insbesondere ist die Steuervorrichtung 110 ausgebildet, um eine Steuerung der Lichtaussendung der Scheinwerfer 105 des Fahrzeugs 100 im Hinblick auf zumindest ein Gefahrenwarnsignal durchzuführen. Die Einleseeinrichtung 120, die Überprüfungseinrichtung 140 und die Veränderungseinrichtung 160 der Steuervorrichtung 110 sind über zumindest eine Kommunikationsschnittstelle miteinander verbunden. Dabei ist die Überprüfungseinrichtung 140 zwischen die Einleseeinrichtung 120 und die Veränderungseinrichtung 160 geschaltet. Auch wenn es in Fig. 1 nicht dargestellt ist, kann die Steuervorrichtung 110 eine Eingangsschnittstelle aufweisen. Die Steuervorrichtung 110 kann ausgebildet sein, um über die Eingangsschnittstelle zumindest ein Gefahrenwarnsignal zu empfangen. Das Gefahrenwarnsignal kann von einer Empfangseinrichtung an die Steuervorrichtung 110 ausgegeben werden. Ferner kann die Steuervorrichtung 110 ausgebildet sein, um über die Eingabeschnittstelle Fahrtdaten zu empfangen. Die Fahrtdaten können von einem Navigationsgerät an die Steuervorrichtung 110 ausgegeben werden. Die Fahrtdaten können Positionsdaten, Routendaten und dergleichen aufweisen. Die Steuervorrichtung 110 kann über die zumindest eine Signalleitung ein Steuersignal an die Scheinwerfer 105 ausgeben. Die Steuervorrichtung 110 ist ausgebildet, um die Lichtaussendung der Scheinwerfer 105 über das Steuersignal zu steuern.

Die Einleseeinrichtung 120 der Steuervorrichtung 110 ist ausgebildet, um das zumindest eine Gefahrenwarnsignal von der Empfangseinrichtung einzulesen. Dabei gibt das zumindest eine Gefahrenwarnsignal eine Gefahrenposition an. Die Einleseeinrichtung 120 kann das zumindest eine Gefahrenwarnsignal an die Überprüfungseinrichtung 140 ausgeben.

Die Überprüfungseinrichtung 140 kann das zumindest eine Gefahrenwarnsignal von der Einleseeinrichtung 120 empfangen. Die Überprüfungseinrichtung 140 ist ausgebildet, um zu überprüfen, ob die durch das zumindest eine Gefahrenwarnsignal angegebene Gefahrenposition innerhalb eines Toleranzbereichs auf einer aktuell von dem Fahrzeug 100 befahrenen Route liegt. Die Überprüfungseinrichtung 140 kann das Ergebnis der Überprüfung in Gestalt eines Überprüfungssignals an die Veränderungseinrichtung 160 ausgeben. Das Überprüfungssignal kann einen ersten logischen Wert aufweisen, wenn die durch das zumindest eine Gefahrenwarnsignal angegebene Gefahrenposition innerhalb des Toleranzbereichs auf der aktuell von dem Fahrzeug 100 befahrenen Route liegt. Das Überprüfungssignal kann einen zweiten logischen Wert aufweisen, wenn die durch das zumindest eine Gefahrenwarnsignal angegebene Gefahrenposition außerhalb des Toleranzbereichs auf der aktuell von dem Fahrzeug 100 befahrenen Route liegt.

Die Veränderungseinrichtung 160 kann das Überprüfungssignal von der Überprüfungseinrichtung 140 empfangen. Die Veränderungseinrichtung 160 ist ausgebildet, um die Lichtaussendung der Scheinwerfer 105 von einer ersten Abstrahlcharakteristik zu einer zweiten Abstrahlcharakteristik zu verändern, wenn die Gefahrenposition innerhalb des Toleranzbereichs auf der aktuell von dem Fahrzeug befahrenen Route liegt. Die Veränderungseinrichtung 160 kann das Steuersignal erzeugen, wobei das Steuersignal die Veränderung der Abstrahlcharakteristik repräsentiert.

Fig. 2 zeigt ein Ablaufdiagramm eines Verfahrens 200 zur Steuerung einer Lichtaussendung zumindest eines Scheinwerfers eines Fahrzeugs, gemäß einem Ausführungsbeispiel der vorliegenden Erfindung. Dabei nutzt das Verfahren 200 eine Empfangseinrichtung. Das Verfahren 200 weist einen Schritt des Einlesens 220 zumindest eines Gefahrenwarnsignals von der Empfangseinrichtung auf, wobei das zumindest eine Gefahrenwarnsignal eine Gefahrenposition angibt. Das Verfahren 200 weist auch einen Schritt des Überprüfens 240 auf, ob die durch das zumindest eine Gefahrenwarnsignal angegebene Gefahrenposition innerhalb eines Toleranzbereichs auf einer aktuell von dem Fahrzeug befahrenen Route liegt. Ferner weist das Verfahren 200 einen Schritt des Veränderns 260 der Lichtaussendung des zumindest einen Scheinwerfers von einer ersten Abstrahlcharakteristik zu einer zweiten Abstrahlcharakteristik auf, wenn die Gefahrenposition innerhalb des Toleranzbereichs auf der aktuell von dem Fahrzeug befahrenen Route liegt, um die Lichtaussendung des zumindest einen Scheinwerfers zu steuern. Das Verfahren 200 kann in Verbindung mit einer Vorrichtung, wie beispielsweise der Steuervorrichtung aus Fig. 1, vorteilhaft ausgeführt werden. Somit kann die Steuervorrichtung bzw. können die Einrichtungen der Steuervorrichtung aus Fig. 1 ausgebildet sein, um die Schritte des Verfahrens 200 durchzuführen.

Fig. 3 zeigt eine Darstellung eines Fahrzeugs bei verschiedenen Abstrahlcharakteristiken. Gezeigt sind ein Fahrzeug 100, eine erste Scheinwerfereinstellung bzw. Abstrahlcharakteristik 370, eine erste Sichtweite 375, eine zweite Scheinwerfereinstellung bzw. Abstrahlcharakteristik 380 und eine zweite Sichtweite 385. Das Fahrzeug 100 befindet sich in einer Kurve. Bei dem Fahrzeug 100 kann es sich beispielsweise um das Fahrzeug aus Fig. 1 oder ein anderes Fahrzeug handein. Die erste Abstrahlcharakteristik 370 bewirkt einen ersten Lichtkegel des Fahrzeugs 100. Die zweite Abstrahlcharakteristik 380 bewirkt einen zweiten Lichtkegel des Fahrzeugs 100. Die erste Abstrahlcharakteristik 370 kann einem normalen Abblendlicht des Fahrzeugs 100 entsprechen. Die erste Sichtweite 375 ist der ersten Abstrahlcharakteristik 370 zugeordnet. Die zweite Abstrahlcharakteristik 380 kann einem dynamischen Kurvenlicht entsprechen. Die zweite Sichtweite 385 ist der zweiten Abstrahlcharakteristik 380 zugeordnet. Die zweite Sichtweite 385 ist relativ zu der ersten Sichtweite 375 verdoppelt.

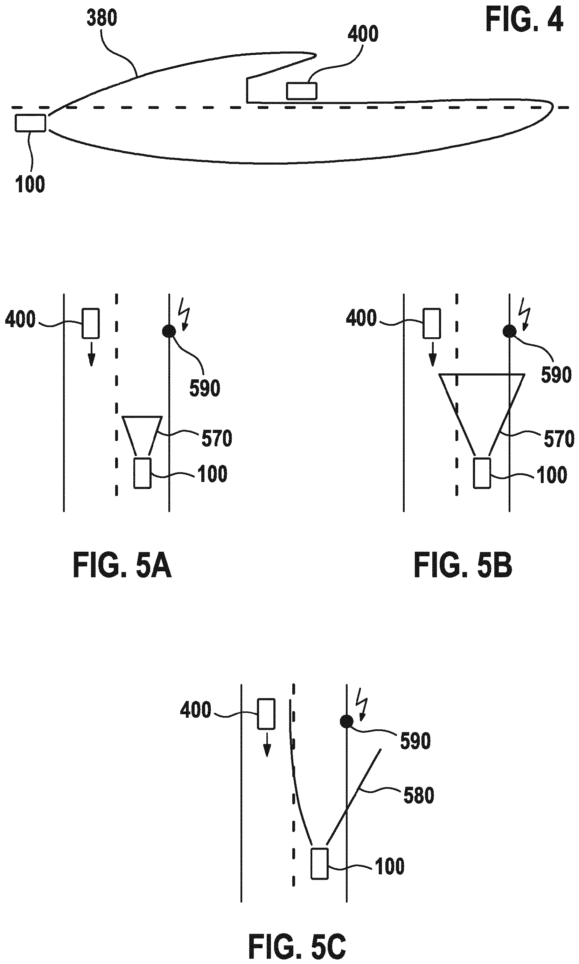

Fig. 4 zeigt eine Darstellung zweier Fahrzeuge bei einer Abstrahlcharakteristik. Gezeigt sind ein Fahrzeug 100, eine Abstrahlcharakteristik 380 und ein weiteres Fahrzeug bzw. Fremdfahrzeug 400. Das Fahrzeug 100 und das Fremdfahrzeug 400 befinden sich in einem Abstand voneinander auf einer Straße. Das Fahrzeug 100 und das Fremdfahrzeug 400 können sich beispielsweise aufeinander zubewegen oder hintereinander herfahren. Die Abstrahlcharakteristik 380 ist dem Fahrzeug 100 zugeordnet. Die Abstrahlcharakteristik 380 bewirkt einen Lichtkegel, der sich von dem Fahrzeug 100 über das Doppelte des Abstandes zwischen den Fahrzeugen 100 und 400 erstreckt. Der Lichtkegel ist ausgebildet, um das Fremdfahrzeug 400 nicht oder kaum zu erfassen. Somit wird das Fremdfahrzeug 400 von dem Lichtkegel nicht oder kaum beleuchtet.

Fig. 5A zeigt eine schematische Darstellung einer Verkehrssituation bei einer Abstrahlcharakteristik. Gezeigt sind ein Fahrzeug 100, ein Fremdfahrzeug 400, eine Abstrahlcharakteristik 570 und eine Gefahrenposition 590. Bei dem Fahrzeug 100 kann es sich um das Fahrzeug aus Fig. 1 handeln. Das Fahrzeug 100 kann auch als Ego-Fahrzeug bezeichnet werden. Das Fahrzeug 100 und das Fremdfahrzeug 400 befinden sich auf einer Straße. Bei der Straße kann es sich beispielsweise um eine Bundesstraße oder Landstraße handeln. Die Straße weist einen geraden Verlauf auf. Das Fahrzeug 100 und das Fremdfahrzeug 400 bewegen sich auf unterschiedlichen Fahrspuren der Straße aufeinander zu. Das Fremdfahrzeug 400 stellt somit einen Gegenverkehr für das Fahrzeug 100 dar. Die Abstrahlcharakteristik 570 ist dem Fahrzeug 100 zugeordnet. Die Abstrahlcharakteristik 570 entspricht hierbei einem Lichtkegel des Fahrzeugs 100. Die Abstrahlcharakteristik 570 kann beispielsweise einem Abblendlicht entsprechen. Der durch die Abstrahlcharakteristik 570 bewirkte Lichtkegel ist entgegen einer Fahrtrichtung des Fremdfahrzeugs 400 gerichtet. Das Fahrzeug 100 und das Fremdfahrzeug 400 sind entlang einer Längserstreckungsrichtung der Straße voneinander beanstandet. Der durch die Abstrahlcharakteristik 570 bewirkte Lichtkegel des Fahrzeugs 100 erstreckt sich über einen Teil eines Abstandes zwischen dem Fahrzeug 100 und dem Fremdfahrzeug 400. Die Gefahrenposition 590 stellt eine Position einer Gefahr bzw. eines Objektes dar, von dem eine Gefahr ausgeht. Die Gefahrenposition 590 befindet sich in einem Randbereich der Straße in Fahrtrichtung vor dem Fahrzeug 100. Ein Abstand zwischen dem Fahrzeug 100 und der Gefahrenposition 590 entspricht näherungsweise dem Abstand zwischen dem Fahrzeug 100 und dem Fremdfahrzeug 400. Bei dem Objekt kann es sich beispielsweise um Personen am Straßenrand, ein sonstiges Objekt am Straßenrand oder dergleichen handeln.

Fig. 5B zeigt eine schematische Darstellung einer Verkehrssituation bei einer Abstrahlcharakteristik. Die Darstellung in Fig. 5B entspricht der Darstellung aus Fig. 5A mit der Ausnahme, dass die Abstrahlcharakteristik 570 einen größeren Lichtkegel als in Fig. 5A bewirkt. Der durch die Abstrahlcharakteristik 570 bewirkte Lichtkegel erstreckt sich über einen größeren Teil des Abstandes zwischen dem Fahrzeug 100 und dem Fremdfahrzeug 400 als in Fig. 5A. Die Abstrahlcharakteristik 570 kann beispielsweise einem Fernlicht entsprechen.

Fig. 5C zeigt eine schematische Darstellung einer Verkehrssituation bei einer Abstrahlcharakteristik gemäß einem Ausführungsbeispiel der vorliegenden Erfindung. Die Darstellung in Fig. 5C entspricht der Darstellung aus Fig. 5A bzw. Fig. 5B mit der Ausnahme, dass dem Fahrzeug 100 eine Abstrahlcharakteristik 580 zugeordnet ist. Die Abstrahlcharakteristik 580 kann eine an die Gefahrenposition 590 angepasste Abstrahlcharakteristik sein. Die Abstrahlcharakteristik 580 bewirkt einen Lichtkegel, der die Gefahrenposition 590 beleuchtet, wobei sich das Fremdfahrzeug 400 außerhalb des durch die Abstrahlcharakteristik 580 bewirkten Lichtkegels befindet. Der durch die Abstrahlcharakteristik 580 bewirkte Lichtkegel ist von dem Fremdfahrzeug 400 weg und der Gefahrenposition 590 hin geschwenkt. Die Abstrahlcharakteristik 580 kann beispielsweise unter Verwendung eines Verfahrens zur Steuerung einer Lichtaussendung zumindest eines Scheinwerfers eines Fahrzeugs, wie dem Verfahren aus Fig. 2, eingestellt werden.

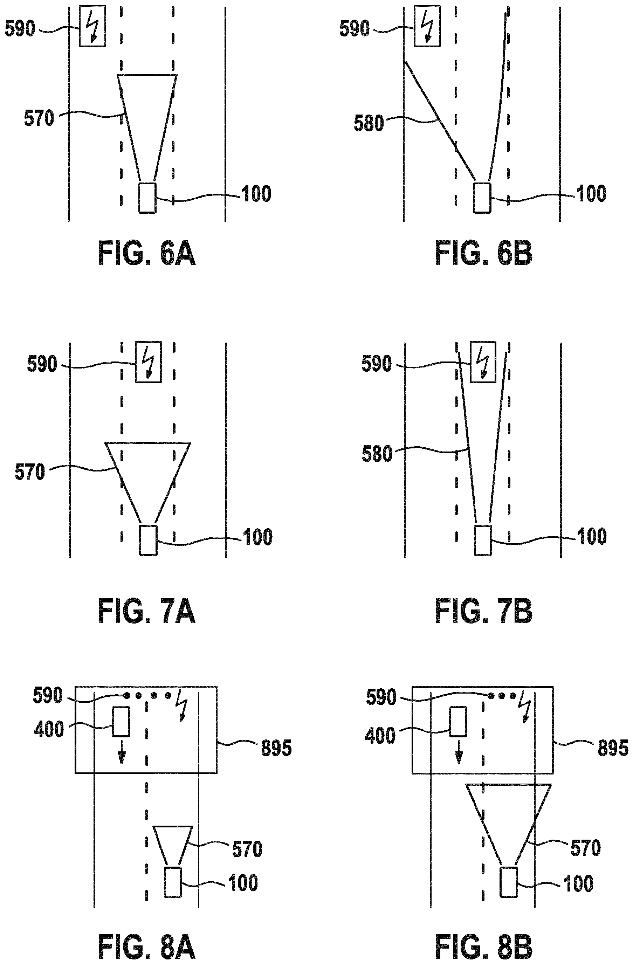

Fig. 6A zeigt eine schematische Darstellung einer Verkehrssituation bei einer Abstrahlcharakteristik. Die Darstellung in Fig. 6A entspricht der Darstellung aus den Fig. 5B mit der Ausnahme, dass in Fig. 6A kein Fremdfahrzeug gezeigt ist, die Straße drei Fahrspuren aufweist, wobei sich das Fahrzeug 100 auf der mittleren Fahrspur befindet, und sich die Gefahrenposition 590 an einer anderen Stelle der Straße befindet. Bei der Straße kann es sich in Fig. 6A beispielsweise um eine Autobahn handeln. Bei dem Objekt von dem die Gefahr ausgeht, an der Gefahrenposition 590 kann es sich beispielsweise um ein unbeleuchtetes Fahrzeug in der linken Fahrspur handeln. Ein von der Abstrahlcharakteristik 570 erzeugter Lichtkegel des Fahrzeugs 100 erstreckt sich über einen Teil des Abstands zwischen dem Fahrzeug 100 und der Gefahrenposition 590.

Fig. 6B zeigt eine schematische Darstellung einer Verkehrssituation bei einer Abstrahlcharakteristik gemäß einem Ausführungsbeispiel der vorliegenden Erfindung. Die Darstellung in Fig. 6B entspricht der Darstellung aus Fig. 6A mit der Ausnahme, dass dem Fahrzeug 100 eine Abstrahlcharakteristik 580 zugeordnet ist. Die Abstrahlcharakteristik 580 kann eine an die Gefahrenposition 590 angepasste Abstrahlcharakteristik sein. Die Abstrahlcharakteristik 580 bewirkt einen Lichtkegel, der die Gefahrenposition 590 beleuchtet. Der durch die Abstrahlcharakteristik 580 bewirkte Lichtkegel ist zu der Gefahrenposition 590 hin geschwenkt. Dabei wird eine rechte Fahrspur der Straße im Wesentlichen nicht durch den Lichtkegel beleuchtet. Die Abstrahlcharakteristik 580 kann beispielsweise unter Verwendung eines Verfahrens zur Steuerung einer Lichtaussendung zumindest eines Scheinwerfers eines Fahrzeugs, wie dem Verfahren aus Fig. 2, eingestellt werden. Somit entspricht die Darstellung in Fig.6B vom Prinzip her auch der Darstellung aus Fig. 5C.

Fig. 7A zeigt eine schematische Darstellung einer Verkehrssituation bei einer Abstrahlcharakteristik. Die Darstellung in Fig. 7A entspricht der Darstellung aus den Fig. 6A mit der Ausnahme, dass sich die Gefahrenposition 590 in der mittleren Fahrspur befindet. Somit befindet sich das Fahrzeug 100 in der gleichen Fahrspur wie die Gefahrenposition 590.

Fig. 7B zeigt eine schematische Darstellung einer Verkehrssituation bei einer Abstrahlcharakteristik gemäß einem Ausführungsbeispiel der vorliegenden Erfindung. Die Darstellung in Fig. 7B entspricht der Darstellung aus Fig. 7A mit der Ausnahme, dass dem Fahrzeug 100 eine Abstrahlcharakteristik 580 zugeordnet ist. Die Abstrahlcharakteristik 580 kann eine an die Gefahrenposition 590 angepasste Abstrahlcharakteristik sein. Die Abstrahlcharakteristik 580 bewirkt einen Lichtkegel, der die Gefahrenposition 590 beleuchtet. Dabei wird im Wesentlichen lediglich die mittlere Fahrspur der Straße durch den Lichtkegel beleuchtet. Die Abstrahlcharakteristik 580 kann beispielsweise unter Verwendung eines Verfahrens zur Steuerung einer Lichtaussendung zumindest eines Scheinwerfers eines Fahrzeugs, wie dem Verfahren aus Fig. 2, eingestellt werden. Somit entspricht die Darstellung in Fig.7B vom Prinzip her auch der Darstellung aus Fig. 5C bzw. Fig. 6B.

Fig. 8A zeigt eine schematische Darstellung einer Verkehrssituation bei einer Abstrahlcharakteristik. Die Darstellung in Fig. 8A entspricht der Darstellung aus Fig. 5A mit der Ausnahme, dass die Gefahrenposition 590 sich an einer anderen Stelle der Straße befindet und um die Gefahrenposition 590 herum ein Toleranzbereich 895 gezeigt ist. In Fig. 8A befindet sich das Fremdfahrzeug 400 zwischen dem Fahrzeug 100 und der Gefahrenposition 590. An der Gefahrenposition 590 kann eine Gefahr von mehreren Objekten ausgehen. Bei den Objekten kann es sich um die Straße überquerende Tiere bzw. Wild handeln. Der Toleranzbereich 895 erstreckt sich quer über die Straße über beide Fahrbahnen und an beiden Seiten der Straße über den Straßenrand hinaus. Der Toleranzbereich 895 erstreckt sich entlang einer Längserstreckungsrichtung der Straße über eine vorgebbare Strecke. In Fig. 8A befindet sich das Fremdfahrzeug 400 innerhalb des Toleranzbereichs 895. Der Toleranzbereich 895 berücksichtigt eine potentielle Bewegung der Objekte, von denen die Gefahr ausgeht, d. h. hier also die Straße überquerenden Tieren, weg von der gemeldeten Gefahrenposition 590.

Fig. 8B zeigt eine schematische Darstellung einer Verkehrssituation bei einer Abstrahlcharakteristik. Die Darstellung in Fig. 8B entspricht der Darstellung aus Fig. 8A mit dem Unterschied, dass die Abstrahlcharakteristik 570 einen größeren Lichtkegel als in Fig. 8A bewirkt. Der durch die Abstrahlcharakteristik 570 bewirkte Lichtkegel erstreckt sich über einen größeren Teil des Abstandes zwischen dem Fahrzeug 100 und der Gefahrenposition 590 bzw. dem Toleranzbereich 895 als in Fig. 8A. Die Abstrahlcharakteristik 570 kann beispielsweise einem Fernlicht entsprechen.

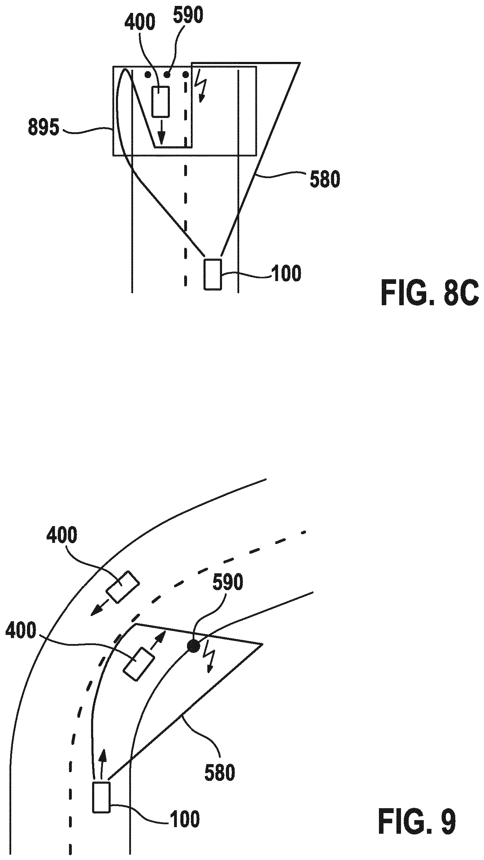

Fig. 8C zeigt eine schematische Darstellung einer Verkehrssituation bei einer Abstrahlcharakteristik gemäß einem Ausführungsbeispiel der vorliegenden Erfindung. Die Darstellung in Fig. 8C entspricht der Darstellung aus Fig. 8A bzw. Fig. 8B mit der Ausnahme, dass dem Fahrzeug 100 eine Abstrahlcharakteristik 580 zugeordnet ist. Die Abstrahlcharakteristik 580 ist eine an die Gefahrenposition 590 und/oder den Toleranzbereich 895 angepasste Abstrahlcharakteristik.

Die Abstrahlcharakteristik 580 bewirkt einen Lichtkegel, der die Gefahrenposition 590 und einen Großteil des Toleranzbereichs 895 beleuchtet, wobei sich das Fremdfahrzeug 400 außerhalb des durch die Abstrahlcharakteristik 580 bewirkten Lichtkegels befindet. Die Abstrahlcharakteristik 580 kann beispielsweise ähnlich der in Fig. 4 gezeigten Abstrahlcharakteristik sein. Die Abstrahlcharakteristik 580 kann beispielsweise unter Verwendung eines Verfahrens zur Steuerung einer Lichtaussendung zumindest eines Scheinwerfers eines Fahrzeugs, wie dem Verfahren aus Fig. 2, eingestellt werden. Somit entspricht die Darstellung in Fig.8C vom Prinzip her auch der Darstellung aus Fig. 5C, Fig. 6B bzw. Fig. 7B.

Fig. 9 zeigt eine schematische Darstellung einer Verkehrssituation bei einer Abstrahlcharakteristik gemäß einem Ausführungsbeispiel der vorliegenden Erfindung. Die Darstellung in Fig. 9 entspricht der Darstellung aus Fig. 5C mit der Ausnahme, dass zwei Fremdfahrzeuge 400 gezeigt sind und die Straße eine Kurve beschreibt. Bei der Straße kann es sich beispielsweise um eine Autobahn oder Bundesstraße handeln. Bei der Kurve handelt es sich in Fig. 9 in Fahrtrichtung des Fahrzeugs 100 betrachtet um eine Rechtskurve. Bei dem Objekt, von dem die Gefahr an der Gefahrenposition 590 ausgeht, kann es sich beispielsweise um einen Gegenstand auf der Fahrbahn des Fahrzeugs 100 oder am Straßenrand handeln. Ein erstes Fremdfahrzeug 400 befindet sich zwischen dem Fahrzeug 100 und der Gefahrenposition 590. Das erste Fremdfahrzeug 400 befindet sich in der gleichen Fahrspur und bewegt sich in die gleiche Richtung wie das Fahrzeug 100. Ein zweites Fremdfahrzeug 400 befindet sich im Verlauf der Straße ungefähr auf Höhe der Gefahrenposition 590. Das zweite Fremdfahrzeug 400 befindet sich in einer anderen Fahrspur als das Fahrzeug 100 und das erste Fremdfahrzeug 400. Das zweite Fremdfahrzeug 400 bewegt sich in eine entgegengesetzte Richtung relativ zu dem Fahrzeug 100 und dem ersten Fremdfahrzeug 400. Bei dem zweiten Fremdfahrzeug 400 handelt es sich somit um Gegenverkehr für das Fahrzeug 100 und das erste Fremdfahrzeug 400. Die Abstrahlcharakteristik 580 bewirkt einen Lichtkegel, der die Gefahrenposition 590 beleuchtet. Der durch die Abstrahlcharakteristik 580 bewirkte Lichtkegel beleuchtet das zweite Fremdfahrzeug 400 nicht. Der durch die Abstrahlcharakteristik 580 bewirkte Lichtkegel kann ausgebildet sein, um das erste Fremdfahrzeug 400 für dessen Fahrer blendungsarm oder blendungsfrei zu beleuchten. Die Abschlagcharakteristik 580 kann beispielsweise einem dynamischen Kurvenlicht, wie beispielsweise diesem aus Fig. 3 entsprechen. Die Abstrahlcharakteristik 580 kann beispielsweise unter Verwendung eines Verfahrens zur Steuerung einer Lichtaussendung zumindest eines Scheinwerfers eines Fahrzeugs, wie dem Verfahren aus Fig. 2, eingestellt werden. Somit entspricht die Darstellung in Fig.8C vom Prinzip her auch der Darstellung aus Fig. 5C, Fig. 6B bzw. Fig. 7B.

Im Folgenden wird ein Ausführungsbeispiel der vorliegenden Erfindung unter Bezugnahme auf die Figuren 1 bis 9 zusammenfassend erläutert. Zunächst wird eine Verkehrsfunkgefahrenwarnung in Gestalt eines Gefahrenwarnsignals empfangen und eingelesen. Dann wird ermittelt, ob die gemeldete Gefahr auf der eigenen Route voraus ist. Ist die Gefahr nicht auf der eigenen Route, wird auf die nächste Warnung gewartet. Ansonsten werden die folgenden Schritte durchgeführt. Es wird dem Fahrer gemeldet, dass die Lichtsysteme auf die Gefahrenmeldung passend eingestellt werden. Das Fahrzeuglicht kann gemäß mindestens einer folgenden Möglichkeiten adaptiert werden. Das Fernlicht wird eingeschaltet oder auf die Gefahrensituation an der Gefahrenposition 590 adaptiert. D.h., der Lichtkegel des Fernlichtes wird so eingestellt, dass die kommende Gefahrensituation gut ausgeleuchtet wird und andere Verkehrsteilnehmer, möglicherweise Gegenverkehr, Verkehr auf gleicher Fahrspur und/oder anderen Fahrspuren, nicht geblendet werden. Es wird also die Abstrahlcharakteristik der Scheinwerfer 105 verändert. Dabei werden gegebenenfalls andere Lichtsysteme, wie beispielsweise ein Kurvenlichtsystem, mit diesem Verfahren 200 abgestellt oder deren Funktion wird eingeschränkt und/oder definiert. Im Folgenden sind erweiternde Beispiele skizziert. Existiert im Fahrzeug 100 zusätzlich ein wie oben beschriebenes IHC-System (Intelligent Headlight Control), das einen sichtbaren herankommenden Verkehr mit Hilfe einer Kamera an dessen Lichtern erkennen kann, kann dieses System bei dem Verfahren 200 zusätzlich verwendet werden. D.h., mit dem System wird überprüft, ob und wo andere Fahrzeuge 400 sind, um diese nicht zu blenden. Nach der Gefahrensituation bzw. nach Passieren der Gefahrenposition 590 wird der ursprüngliche Status des Lichtes des Fahrzeugs 100 vor der Gefahrenposition 590 und/oder Gefahrenwarnmeldung wiederhergestellt. Existiert im Fahrzeug 100 zusätzlich ein IHC-System, kann dieses System bei dem Schritt des Wiederherstellens zusätzlich verwendet werden. D.h., mit dem System wird vor dem Wiederherstellen des ursprünglichen Lichtzustandes bzw. der ursprünglichen Abstrahlcharakteristik 570 überprüft, ob ein Fremdfahrzeug 400 kommt und das Wiederherstellen sinnvoll ist und beispielsweise keine Blendung anderer Verkehrsteilnehmer verursacht.

Gemäß Ausführungsbeispielen der vorliegenden Erfindung erfolgt somit eine Adaption von, beispielsweise intelligenten, Fahrzeuglichtsystemen auf Basis von Verkehrsfunk-Gefahrenwarnungen. Ein Vorteil der vorliegenden Erfindung ist, dass der Fahrer des Fahrzeugs 100 möglichst frühzeitig eine optimale Sicht auf die Gefahrensituation an der Gefahrenposition 590 hat.

## Patentansprüche

1. Verfahren (200) zur Steuerung einer Lichtaussendung zumindest eines Scheinwerfers (105) eines Fahrzeugs (100), wobei das Verfahren (200) eine Empfangseinrichtung nutzt, wobei das Verfahren (200) folgende Schritte aufweist:
Einlesen (220) zumindest eines mittels der Empfangseinrichtung empfangenen Gefahrenwarnsignals, wobei das zumindest eine Gefahrenwarnsignal eine Gefahrenposition (590) angibt, an der sich ein Objekt befindet, das eine Gefahr für das Fahrzeug darstell
Ermitteln eines Toleranzbereichs abhängig von dem zumindest einen Gefahrenwarnsignal, wobei der Toleranzbereich ein Bereich um diese Route ist, der die Route und einen über den Rand der Route hinausgehenden Bereich umfasst;
Überprüfen (240), ob die durch das zumindest eine Gefahrenwarnsignal angegebene Gefahrenposition (590) innerhalb des Toleranzbereichs (895) auf einer aktuell von dem Fahrzeug (100) befahrenen Route liegt; und
Verändern (260) der Lichtaussendung des zumindest einen Scheinwerfers (105) von einer ersten Abstrahlcharakteristik (570) zu einer zweiten Abstrahlcharakteristik (580), wenn die Gefahrenposition (590) innerhalb des Toleranzbereichs (895) auf der aktuell von dem Fahrzeug (100) befahrenen Route liegt, um die Lichtaussendung des zumindest einen Scheinwerfers (105) zu steuern, wobei die zweite Abstrahlcharakteristik (580) eine an die Gefahrenposition (590) und/oder den Toleranzbereich (895) angepasste Abstrahlcharakteristik ist.

2. Verfahren (200) gemäß Anspruch 1, **dadurch gekennzeichnet, dass** im Schritt des Veränderns (260) die erste Abstrahlcharakteristik (570) eine ursprüngliche Abstrahlcharakteristik repräsentiert und die zweite Abstrahlcharakteristik (580) eine an die angegebene Gefahrenposition (590) angepasste Abstrahlcharakteristik repräsentiert, wobei die angegebene Gefahrenposition (590) bei Ausleuchtung unter Verwendung der zweiten Abstrahlcharakteristik (580) heller ausgeleuchtet ist, als bei Ausleuchtung unter Verwendung der ersten Abstrahlcharakteristik.

3. Verfahren (200) gemäß einem der vorangegangenen Ansprüche, **gekennzeichnet durch** einen Schritt des Bestimmens der zweiten Abstrahlcharakteristik (580) basierend auf dem zumindest einen Gefahrenwarnsignal oder basierend auf dem zumindest einen Gefahrenwarnsignal sowie auf einer Position zumindest eines weiteren Fahrzeugs (400) in einer Umgebung der angegebenen Gefahrenposition (590).

4. Verfahren (200) gemäß einem der vorangegangenen Ansprüche, **dadurch gekennzeichnet, dass** im Schritt des Einlesens (220) zumindest ein Gefahrenwarnsignal eingelesen wird, das zusätzlich eine Gefahreneigenschaft angibt.

5. Verfahren (200) gemäß einem der vorangegangenen Ansprüche, **dadurch gekennzeichnet, dass** im Schritt des Ermitteins der Toleranzbereich (895) abhängig von einer Straßeneigenschaft bei der angegebenen Gefahrenposition (590) ermittelt wird.

6. Verfahren (200) gemäß einem der vorangegangenen Ansprüche, **dadurch gekennzeichnet, dass** im Schritt des Veränderns die Lichtaussendung des zumindest einen Scheinwerfers (105) verändert wird, wenn sich das Fahrzeug (100) der angegebenen Gefahrenposition (590) bis auf einen vorgebbaren Abstand genähert hat.

7. Verfahren (200) gemäß einem der vorangegangenen Ansprüche, **gekennzeichnet durch** einen Schritt des Änderns der Lichtaussendung des zumindest einen Scheinwerfers (105) von der zweiten Abstrahlcharakteristik (580) zu einer dritten Abstrahlcharakteristik, wenn das Fahrzeug (100) die Gefahrenposition (590) passiert hat.

8. Verfahren (200) gemäß einem der vorangegangenen Ansprüche, **gekennzeichnet durch** einen Schritt des Wiederherstellens der ersten Abstrahlcharakteristik (570) der Lichtaussendung des zumindest einen Scheinwerfers (105), wenn das Fahrzeug (100) die Gefahrenposition (590) passiert hat.

9. Vorrichtung (110), die ausgebildet ist, um die Schritte des Verfahrens (200) gemäß einem der Ansprüche 1 bis 8 durchzuführen.

10. Computerprogrammprodukt mit Programmcode zur Durchführung des Verfahrens (200) nach einem der Ansprüche 1 bis 8, wenn das Programm auf einer Vorrichtung (110) ausgeführt wird.

## Claims

1. Method (200) for controlling a light emission of at least one headlamp (105) of a vehicle (100), wherein the method (200) uses a receiving device, wherein the method (200) includes the following steps:
reading (220) at least one hazard warning signal received by means of the receiving device, wherein the at least one hazard warning signal indicates a hazard position (590) at which an object that constitutes a hazard to the vehicle is located,
ascertaining a tolerance region in dependence on the at least one hazard warning signal, wherein the tolerance region is a region around said route, encompassing both the route and a region extending beyond the periphery of the route;
checking (240) whether the hazard position (590) indicated by the at least one hazard warning signal lies within the tolerance region (895) on a route that is currently being travelled by the vehicle (100); and
changing (260) the light emission of the at least one headlamp (105) from a first radiation pattern (570) to a second radiation pattern (580) if the hazard position (590) lies within the tolerance region (895) on the route currently being travelled by the vehicle (100) to control the light emission of the at least one headlamp (105), wherein the second radiation pattern (580) is a radiation pattern that has been adapted to the hazard position (590) and/or the tolerance region (895).

2. Method (200) according to Claim 1, **characterized in that**, during the changing step (260), the first radiation pattern (570) represents an original radiation pattern and the second radiation pattern (580) represents a radiation pattern that has been adapted to the indicated hazard position (590), wherein the indicated hazard position (590) is lit more brightly when the second radiation pattern (580) is used for lighting than when the first radiation pattern is used for lighting.

3. Method (200) according to either of the preceding claims, **characterized by** a step of determining the second radiation pattern (580) in dependence on the at least one hazard warning signal or in dependence on the at least one hazard warning signal and a position of at least one further vehicle (400) in a vicinity of the indicated hazard position (590).

4. Method (200) according to one of the preceding claims, **characterized in that**, during the reading step (220), at least one hazard warning signal is read that additionally indicates a hazard property.

5. Method (200) according to one of the preceding claims, **characterized in that**, during the ascertaining step, the tolerance region (895) is ascertained in dependence on a road property at the indicated hazard position (590).

6. Method (200) according to one of the preceding claims, **characterized in that**, during the changing step, the light emission of the at least one headlamp (105) is changed when the vehicle (100) has approached the indicated hazard position (590) up to a specifiable distance.

7. Method (200) according to one of the preceding claims, **characterized by** a step of changing the light emission of the at least one headlamp (105) from the second radiation pattern (580) to a third radiation pattern when the vehicle (100) has passed the hazard position (590).

8. Method (200) according to one of the preceding claims, **characterized by** a step of restoring the first radiation pattern (570) of the light emission of the at least one headlamp (105) when the vehicle (100) has passed the hazard position (590).

9. Apparatus (110), which is configured for carrying out the steps of the method (200) according to one of Claims 1 to 8.

10. Computer program product with program code for carrying out the method (200) according to one of Claims 1 to 8 when the program is executed on an apparatus (110) .

## Revendications

1. Procédé (200) de commande de l'émission de lumière d'au moins un phare (105) d'un véhicule (100), le procédé (200) utilisant un moyen de réception, le procédé (200) comprenant les étapes suivantes :
lire (220) au moins un signal d'avertissement de danger reçu à l'aide du moyen de réception, l'au moins un signal d'avertissement de danger indiquant une position de danger (590) à laquelle se trouve un objet qui représente un danger pour le véhicule,
déterminer une plage de tolérance en fonction de l'au moins un signal d'avertissement de danger,
la plage de tolérance étant une zone autour de cet itinéraire qui comprend l'itinéraire et une zone s'étendant au-delà du bord de l'itinéraire ;
vérifier (240) si la position de danger (590), indiquée par l'au moins un signal d'avertissement de danger, se situe dans la plage de tolérance (895) sur un itinéraire actuellement emprunté par le véhicule (100) ;
et
modifier (260) l'émission de lumière de l'au moins un phare (105) d'une première caractéristique de rayonnement (570) en une deuxième caractéristique de rayonnement (580) lorsque la position de danger (590) se situe dans la plage de tolérance (895) sur l'itinéraire actuellement emprunté par le véhicule (100) afin de commander l'émission de lumière de l'au moins un phare (105), la deuxième caractéristique de rayonnement (580) étant une caractéristique de rayonnement qui est adaptée à la position de danger (590) et/ou à la plage de tolérance (895).

2. Procédé (200) selon la revendication 1, **caractérisé en ce que**, à l'étape de modification (260), la première caractéristique de rayonnement (570) représente une caractéristique de rayonnement d'origine et la deuxième caractéristique de rayonnement (580) représente une caractéristique de rayonnement adaptée à la position de danger indiquée (590), la position de danger indiquée (590) étant éclairée plus brillamment lorsqu'elle est éclairée à l'aide de la deuxième caractéristique de rayonnement (580) que lorsqu'elle est éclairée à l'aide de la première caractéristique de rayonnement.

3. Procédé (200) selon l'une des revendications précédentes, **caractérisé par** une étape de détermination de la deuxième caractéristique de rayonnement (580) sur la base de l'au moins un signal d'avertissement de danger ou sur la base de l'au moins un signal d'avertissement de danger ainsi que d'une position d'au moins un autre véhicule (400) dans un environnement de la position de danger indiquée (590).

4. Procédé (200) selon l'une des revendications précédentes, **caractérisé en ce qu'**au moins un signal d'avertissement de danger, qui indique en outre une propriété de danger, est lu à l'étape de lecture (220).

5. Procédé (200) selon l'une des revendications précédentes, **caractérisé en ce qu'**à l'étape de détermination, la plage de tolérance (895) est déterminée en fonction d'une propriété de route à la position de danger indiquée (590).

6. Procédé (200) selon l'une des revendications précédentes, **caractérisé en ce qu'**à l'étape de modification, l'émission de lumière de l'au moins un phare (105) est modifiée lorsque le véhicule (100) s'est approché de la position de danger indiquée (590) jusqu'à une distance prédéterminable.

7. Procédé (200) selon l'une des revendications précédentes, **caractérisé par** une étape de modification de l'émission de lumière de l'au moins un phare (105) de la deuxième caractéristique de rayonnement (580) à une troisième caractéristique de rayonnement lorsque le véhicule (100) a passé la position de danger (590).

8. Procédé (200) selon l'une des revendications précédentes, **caractérisé par** une étape de restitution de la première caractéristique de rayonnement (570) de l'émission de lumière de l'au moins un phare (105) lorsque le véhicule (100) a passé la position de danger (590) .

9. Dispositif (110) destiné à la mise en œuvre des étapes du procédé (200) selon l'une des revendications 1 à 8.

10. Progiciel comprenant un code programme destiné à mettre en œuvre le procédé (200) selon l'une des revendications 1 à 8, lorsque le programme est exécuté sur un dispositif (110).
